# EUROPÄISCHE PATENTANMELDUNG

(11) **EP 4 276 002 A1**
(43) Veröffentlichungstag der Anmeldung: **15.11.2023**
(21) Anmeldenummer: 23172269.5
(22) Anmeldetag: 09.05.2023
(51) Int. Cl.: B62K 25/02, B62K 19/28, B62K 25/28

(54) **STECKACHSENSYSTEM EINES FAHRRADS**

(30) Priorität: 10.05.2022 DE 202022102547 U
(71) Anmelder: Canyon Bicycles GmbH, 56073 Koblenz (DE)
(72) Erfinder: Thumm, Johannes, 56076 Koblenz (DE)
(74) Vertreter: dompatent von Kreisler Selting Werner - Partnerschaft von Patent- und Rechtsanwälten mbB

(57) **Zusammenfassung**

Ein Steckachsensystem weist zwei Fahrradelemente (20), insbesondere zwei Kettenstreben (20) auf. Diese sind mit Hilfe einer Steckachse (12) miteinander verbunden. Zur Verbindung sind zwei Klemmelemente (28) vorgesehen, sodass zwischen den beiden Fahrradelementen (20) und der Steckachse (12) eine kraftschlüssige Verbindung realisiert ist.

## Beschreibung

Die Erfindung betrifft ein Steckachsensystem. Mit derartigen Steckachsensystemen können Fahrradelemente, wie beispielsweise Kettenstreben, Rockerstreben oder dgl., schwenkbar mit einem Fahrradrahmen verbunden werden.

Derartige Steckachsensysteme dienen beispielsweise zum schwenkbaren Verbinden eines Fahrradhinterbaus über ein Hauptschwingenlager mit dem Fahrradrahmen. Üblicherweise ist das Steckachsensystem im Bereich des Tretlagers am Rahmen angeordnet. Insbesondere sind hierbei die beiden Kettenstreben schwenkbar am Rahmen gehalten. Bei Steckachsensystemen ist eine Steckachse vorgesehen, die durch eine entsprechende Öffnung an dem Fahrradrahmenelement gesteckt ist. Ferner sind in diesem Bereich zwei üblicherweise als Kugellager ausgebildete Lager angeordnet. Da die beiden Kettenstreben sich stets gleichförmig bewegen müssen, sind bei derartigen bekannten Steckachsensystemen die beiden Kettenstreben über eine Kettenstrebenbrücke miteinander verbunden. Diese Brücke ist im Bereich der Steckachse, d.h. nahe dem Rahmen, angeordnet. Die beiden Kettenstreben bilden somit zusammen mit der Kettenstrebenbrücke ein starres Bauteil und sind somit torsionssteif miteinander verbunden. Die zur steifen Verbindung erforderlichen Brücke weist jedoch den Nachteil auf, dass der erforderliche Platzbedarf groß ist. Dies ist insbesondere bei Fahrrädern mit elektromotorischem Antrieb von Nachteil, da somit der Bauraum für die Anordnung eines Mittelmotors in diesem Bereich begrenzt ist.

Aus DE 20 2018 002 931 ist ein Steckachsensystem bekannt, bei dem keine Kettenstrebenbrücke vorgesehen ist. Um dennoch eine torsionssteife Verbindung der beiden Kettenstreben zu realisieren, ist im Bereich der Steckachse zusätzlich eine formschlüssige Verbindung der beiden Kettenstreben über eine Verzahnung vorgesehen. Wenngleich hierdurch die Kettenstrebenbrücke entfallen kann, weist dieses System jedoch den Nachteil auf, dass es sich um ein komplexes System handelt und die Verzahnung, insbesondere in der Fertigung, kostenintensiv ist. Ferner muss, unabhängig von den Verzahnungen, sichergestellt werden, dass das axiale Lagerspiel der beiden Hauptschwingenlager eingestellt werden kann.

Gefederte Fahrradhinterbauten weisen ferner neben den gelenkig, insbesondere mit dem Fahrradrahmen verbundene Kettenstreben, Sattelstreben auf. Diese sind gelenkig bzw. schwenkbar mit einem Wippenelement verbunden. Das Wippenelement ist wiederum schwenkbar mit dem Rahmen verbunden. Ferner ist das Wippenelement an dem den Sattelstreben gegenüberliegenden Ende mittelbar oder unmittelbar mit einem Dämpfungselement verbunden. Derartige Wippenelemente sind üblicherweise aus zwei Bauteilen, so genannten Rockerstreben, zusammengesetzt, wobei die beiden Rockerstreben üblicherweise seitlich neben dem Sattelrohr des Rahmens angeordnet sind. Da die Rockerstreben, bzw. das Wippenelement erhebliche Kräfte übertragen müssen, sind diese insbesondere auf der Rückseite des Sattelrohrs, d.h. auf der dem Hinterrad zugewandten Seite, miteinander verbunden. Dies hat, ähnlich der Verbindung von Kettenstreben den Nachteil, dass hierfür ein entsprechender Raum vorgesehen sein muss.

Aufgabe der Erfindung ist es, ein Steckachsensystem zu schaffen, mit dem auf einfache Weise eine platzsparende Verbindung zweier schwenkbar miteinander verbundenen Fahrradelemente realisiert ist.

Die Lösung der Aufgabe erfolgt erfindungsgemäß durch ein Steckachsensystem mit den Merkmalen des Anspruchs 1.

Das erfindungsgemäße Steckachsensystem dient zur schwenkbaren Verbindung von zwei Fahrradelementen. Insbesondere handelt es sich hierbei um eine schwenkbare Verbindung der beiden Kettenstreben mit einem Fahrradrahmenelement. Ferner handelt es sich bei dem erfindungsgemäßen Steckachsensystem insbesondere um die schwenkbare Verbindung von zwei Rockerstreben mit einem Fahrradrahmenelement, insbesondere dem Sattelrohr des Fahrradrahmens. Entsprechend können mit einem erfindungsgemäßen Steckachsensystem platzsparend auch andere Fahrradelemente schwenkbar miteinander verbunden werden, wobei die Erfindung nachfolgend beispielhaft an der Verbindung der beiden Kettenstreben mit dem Fahrradrahmen beschrieben ist.

Das erfindungsgemäße Steckachsensystem weist eine Steckachse auf, die zur insbesondere mittelbaren Verbindung von zwei Fahrradelementen dient. Insbesondere erfolgt die Erfindung der beiden Kettenstreben über die Steckachse, sodass die beiden Kettenstreben schwenkbar mit dem Fahrradrahmen verbunden sind. Erfindungsgemäß ist jeweils zwischen einem der Fahrradelemente, d.h. insbesondere jeder der Kettenstreben und der Steckachse, ein Klemmelement angeordnet. Das Klemmelement ist erfindungsgemäß derart ausgebildet, dass hierdurch ein kraftschlüssiges Verbinden der beiden Fahrradelemente, d.h. der beiden Kettenstreben, mit der Steckachse realisiert ist. Durch die kraftschlüssige Verbindung zwischen den Kettenstreben und der Steckachse ist somit eine starre, insbesondere torsionssteife, Verbindung zwischen den beiden Kettenstreben über die Steckachse realisiert. Insofern kann eine Kettenstrebenbrücke entfallen, oder zumindest deutlich kleiner und somit platzsparender ausgebildet sein. Aufgrund des Vorsehens von Klemmelementen ist die Montage, sowie auch die Herstellung einfach und kostengünstig.

Vorzugsweise ist mit der Steckachse ein zumindest in axialer Richtung der Steckachse verschiebbares Justageelement verbunden. Durch das axiale Verschieben, bzw. axiale Bewegen des Justageelements kann die Klemmkraft eingestellt werden. Vorzugsweise kann das Justageelement zusätzlich auch zur axialen Vorspannung der beiden Lagerelemente bzw. zum Einstellen der Lagerelemente genutzt werden, sodass kein gesondertes Justieren der Lagerelemente erforderlich ist. Dies ist insbesondere vorteilhaft, wenn es sich bei den Lagerelementen um Kugellager handelt.

Ein axiales Verschieben des mindestens einen Justageelements erfolgt in bevorzugter Ausführungsform derart, dass das Justageelement als Schraube ausgebildet ist oder einen mit einem Gewinde versehen Ansatz aufweist. Somit erfolgt das axiale Verschieben des Justageelements durch Drehen. Vorzugsweise weist die Steckachse eine Öffnung auf, in die die Schraube bzw. der Gewindeansatz eingeschraubt ist. Hierbei handelt es sich insbesondere um eine mittige zentrale Öffnung der Steckachse.

Es ist möglich auf beiden Seiten der Steckachse jeweils ein Justageelement, insbesondere in Form einer Schraube vorzusehen, sodass eine sehr feine Justage der Klemmkraft zur klemmenden Verbindung der Steckachse mit den beiden Kettenstreben und sofern vorgesehen, ein gleichzeitiges Justieren der Lager möglich ist.

Bei einer vereinfachten Ausführungsform ist nur ein Justageelement vorgesehen. Bei dieser Ausführungsform ist die Steckachse vorzugsweise derart ausgebildet, dass an der dem Justageelement gegenüberliegenden Seite der Steckachse diese einen Ansatz aufweist, der insbesondere kopfförmig bzw. ringförmig ausgebildet ist. Dieser kann in bevorzugter Ausführungsform mit der Steckachse einstückig ausgebildet sein. Hierbei ist der kopfförmige Ansatz insbesondere an einer Außenseite der Kettenstrebe angeordnet. Entsprechend ist auch ein kopfförmiger Ansatz des insbesondere als Schraube ausgebildeten Justageelements an der Außenseite der gegenüberliegenden Kettenstrebe angeordnet. Beim Einschrauben des Justageelements bewegen sich somit die beiden insbesondere kopfförmigen Ansätze aufeinander zu und bewirken ein klemmendes Verbinden der beiden Kettenstreben mit der Steckachse über die erfindungsgemäß vorgesehenen Klemmelemente.

Bei den Klemmelementen kann es sich beispielsweise um elastisch verformbare Elemente handeln, die durch zusammendrücken eine kraftschlüssige Verbindung zwischen jeweils einer Kettenstrebe und der Steckachse realisieren. Vorzugsweise sind die Klemmelemente teilringförmig oder ringförmig ausgebildet und umgeben die Steckachse insbesondere vollständig. Hierdurch ist eine gleichmäßige Kraftübertragung zwischen den Kettenstreben über die Klemmelemente auf die Steckachse sichergestellt.

In besonders bevorzugter Ausführungsform weist zumindest eine, insbesondere beide Klemmelemente eine konische Außenseite und/oder eine konische Innenseite auf. Die Anlageflächen des Klemmelements an den Kettenstreben, insbesondere einer Durchgangsöffnung in den Kettenstreben, sowie an der Außenseite der Steckachse sind vorzugsweise komplementär ausgebildet. Wenn sowohl die Außenseite als auch die Innenseite insbesondere der beiden Klemmelemente konisch ausgebildet ist, kann durch ein axiales Verschieben der Klemmelemente eine klemmende Verbindung sowohl gegenüber der Steckachse als auch gegenüber den Kettenstreben auf einfache Weise realisiert werden.

Zur Vereinfachung der Montage ist es bevorzugt, dass die Klemmelemente an ihrer Außenseite konisch ausgebildet sind und an ihrer Innenseite zylindrisch. Hierdurch ist zunächst ein einfaches Verschieben der Klemmelemente auf der Steckachse möglich, solange noch keine Kraft auf die Klemmelenente durch das mindestens eine Justageelement aufgebracht ist. Bei dieser Ausführungsform der Klemmelemente ist es bevorzugt, wenn die Klemmelemente aus elastisch verformbarem Material hergestellt sind und/oder einen radialen Schlitz aufweisen. Durch Aufbringen der Klemmkraft über das Justageelement erfolgt somit einerseits ein klemmendes Verbinden über die konische Außenfläche der Klemmelemente gegenüber den konischen Innenflächen an den Kettenstreben. Andererseits erfolgt durch die Verformung insbesondere aufgrund des radialen Schlitzes ein Verringern des Innendurchmessers der Klemmelemente, sodass diese Klemmen an der Außenseite der Steckachse fixiert werden.

Die beiden Klemmelemente können unterschiedlich ausgebildet sein, wobei es bevorzugt ist, dass die beiden Klemmelemente eine identische Form aufweisen.

Erfindungsgemäß kann die vorstehend beschriebene Ausführungsform, insbesondere in bevorzugten Weiterbildung auch für zweier Rockerstreben genutzt werden. Diese werden mit den entsprechenden Bauteilen miteinander verbunden und sind insbesondere schwenkbar an einem Sattelrohr des Fahrradrahmens befestigt. Eine die beiden Rockerstreben verbindende Brücke ist nicht erforderlich oder kann zumindest deutlich dünner und somit leichter ausgebildet sein. Hierdurch ist auch der erforderliche Platzbedarf deutlich reduziert.

Zur schwenkbaren Verbindung der beiden Fahrradelemente, insbesondere der beiden Kettenstreben mit einem Fahrradrahmenelement weist dieses vorzugsweise eine Durchgangsöffnung auf. In der Durchgangsöffnung ist die Steckachse angeordnet. Zusätzlich können in der Durchgangsöffnung Lagerelemente, insbesondere Kugellager, angeordnet sein. Zum Justieren und insbesondere vorspannen der beiden Kugellager ist es bevorzugt, dass eine nach innen weisende Seite der beiden Klemmelemente mittelbar oder unmittelbar auf einen Lagerring einwirkt. Hierdurch erfolgt durch das klemmende Justieren der Klemmelemente mit Hilfe des Justageelements gleichzeitig ein Einstellen des Lagerspiels, bzw. ein Vorspannen der Lager. Eine entsprechende Verbindung kann auch für Rockerstreben mit einer im Sattelrohr, bzw. einem Ansatz des Sattelrohrs vorgesehenen Durchgangsöffnung erfolgen.

Nachfolgend wird die Erfindung anhand einer bevorzugten Ausführungsform unter Bezugnahme auf die anliegenden Zeichnungen näher erläutert.

Es zeigen:

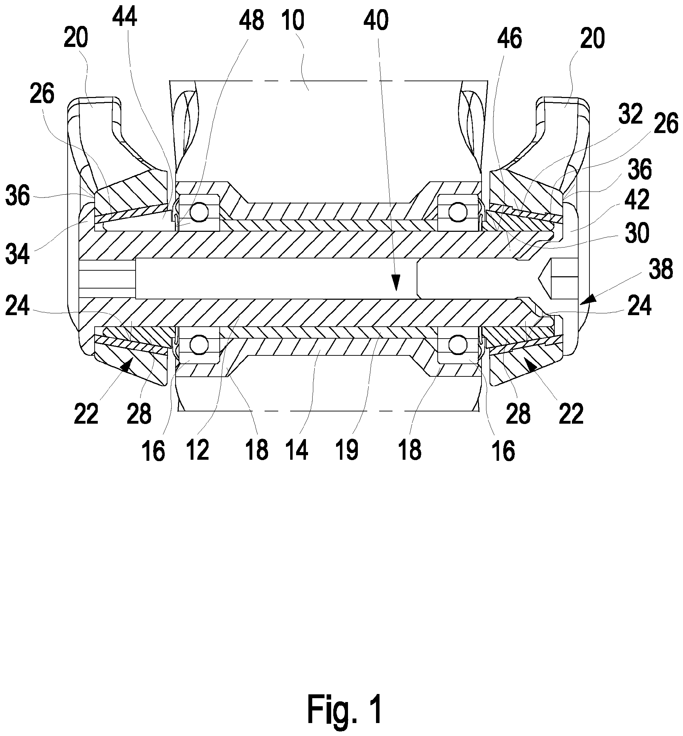

- Figur 1: schematischer Querschnitt eines Steckachsensystem, wobei es sich im dargestellten Ausführungsbeispiel um zwei Kettenstreben handelt, die schwenkbar mit dem Fahrradrahmenelement verbunden sind,
- Figur 2: schematische perspektivische Ansicht der bevorzugten Ausführungsform eines Klemmelements und
- Figur 3: bevorzugte Ausführungsform einer zwischen den Lager angeordneten Hülse

Das Steckachsensystem ist in einem Fahrradrahmenelement 10 angeordnet und weist eine Steckachse 12 auf. Die Steckachse 12 ist in einer im Fahrradrahmen 10 vorgesehenen Durchgangsöffnung 14 angeordnet. In der Durchgangsöffnung 14 sind im dargestellten Ausführungsbeispiel als Kugellager ausgebildete Hauptschwingenlager 16 angeordnet. Diese sind derart angeordnet, dass zwischen den beiden Innenringen der beiden Kugellager 16 eine Hülse 19 angeordnet ist. Die beiden Außenringe der Kugellager 16 stützen sich an entsprechenden Absätzen 18 des Rahmenelements 10 ab. Bei Fahrradrahmen aus Karbon oder dergleichen sind die Absätze 18 durch fest mit dem entsprechenden Rahmenelement verbundene Einlegeteile, die insbesondere aus Aluminium hergestellt sind, ausgebildet. Diese sind insbesondere durch Co-molding mit dem Fahrradrahmenelement 10 verbunden.

Auf den beiden Seiten des Rahmenelements 10 ist jeweils eine Kettenstrebe 20 angeordnet. Die beiden Kettenstreben 20 weisen jeweils eine Durchgangsöffnung 22 auf. Die Durchgangsöffnung 22 weist eine sich nach innen, d.h. in Richtung des Fahrradrahmenelements 10 erweiternde konische Innenseite 24 auf, wobei ggf. ein hülsenartiges Zwischenelement 26 aus entsprechendem ggf. härterem Material vorgesehen sein kann. Die Zwischenelemente 26 sind bei aus Karbon hergestellten Kettenstreben 20 vorzugsweise wiederum fest mit den Kettenstreben, insbesondere durch Co-molding, verbunden. Hierbei ist es bevorzugt, dass die Zwischenelemente 26 als Aluminium-Inserts ausgebildet sind.

In den beiden Durchgangsöffnungen 22 der beiden Kettenstreben 20 ist jeweils ein Klemmelement 28 vorgesehen, wobei die Klemmelemente 28 identisch ausgebildet sind. Die beiden Klemmelemente 28 weisen eine zylindrische Innenseite 30 auf, die im Durchmesser nur geringfügig größer ist als der Außendurchmesser der Steckachse 12 in diesem Bereich ist. Ferner weisen die beiden Klemmelemente 28 eine konische Außenseite 32 auf, wobei sich der Durchmesser der Außenseite 32 der Klemmelemente 28 zur Ausbildung der konusförmigen Außenseite 32 nach Außen verringert. Die Konusfläche 32 ist somit im Wesentlichen parallel zur der konusförmigen Innenseite 24 der Durchgangsöffnung 22 der Kettenstreben 20.

Im dargestellten Ausführungsbeispiel weist die Steckachse auf der in der Figur linken Seite einen kopfförmigen Ansatz 34 auf. Dieser liegt an einer Außenseite 36 der in der Figur linken Kettenstrebe 20 an. Die Steckachse wird somit zur Montage in der Figur von links eingesteckt. Auf der dem kopfförmigen Ansatz 34 gegenüberliegenden Seite ist ein Justageelement 38 vorgesehen. Dieses ist im dargestellten Ausführungsbeispiel als Schraube ausgebildet, die in ein in einer Innenbohrung 40 der Steckachse 12 vorgesehenes Gewinde eingreift. Das Justageelement 38 weist ebenfalls einen kopfförmigen Ansatz 42 auf, der wiederum an einer Außenseite 36 der in der Figur rechten Kettenstrebe 20 anliegt.

Ferner weisen im dargestellten Ausführungsbeispiel die beiden Klemmelemente 28 jeweils einen radialen Schlitz 44 auf, der sich über die gesamte Breite und Höhe der beiden Klemmelemente erstreckt.

Zur Montage werden zunächst in der Durchgangsöffnung 14 des Rahmenelements 10 die beiden Lager 16 zusammen mit der Hülse 18 angeordnet. In den beiden Kettenstreben 20 werden die Hülsen 26 sowie die beiden Klemmelemente 28 angeordnet. Anschließend erfolgt ein Einführen der Steckachse 12 in der Figur von links. Zur Fixierung und somit kraftschlüssigen Verbindung zwischen den Kettenstreben 20 und der Steckachse 12 wird das Justageelement 38 in die Innenbohrung 40 eingeschraubt. Hierbei erfolgt eine klemmende kraftschlüssige Verbindung über die keilförmigen Flächen 32, 24 und aufgrund des Vorsehens eines Schlitzes 44 in den Klemmelementen 28 ein klemmendes Verbinden zwischen der zylindrischen Innenseite 30 der Klemmelemente und einer ebenfalls zylindrischen Außenseite 46 der Steckachse 12.

Da die Innenseiten 48 der beiden Klemmelemente 28 an den Innenringen der Kugellager 16 mittelbar oder unmittelbar anliegen, erfolgt gleichzeitig ein Justieren bzw. Vorspannen der beiden Kugellager 16.

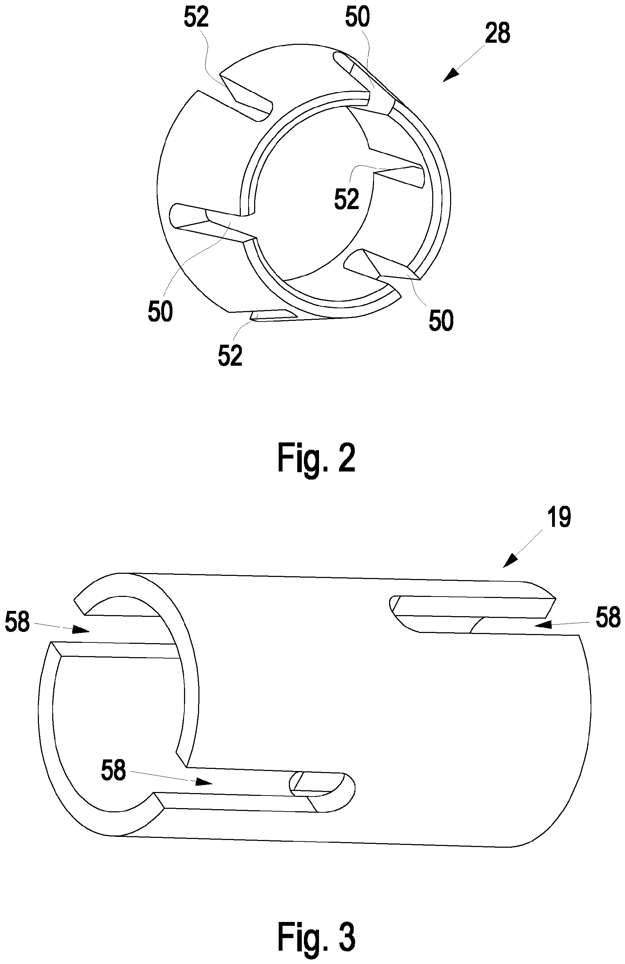

Figur 2 zeigt eine bevorzugte Ausführungsform eines Klemmelements 28 in perspektivischer Ansicht. Anstelle eines einzelnen radialen Schlitzes 44 weist dieses Klemmelement mehrere Schlitze 50, 52 auf. Diese erstrecken sich in Längsrichtung des Klemmelements 28 jeweils nicht über die gesamte Länge und sind an unterschiedlichen, einander gegenüberliegenden Seiten 54, 56 des Klemmelements 28 offen. Bevorzugt ist eine regelmäßige Anordnung von sechs Schlitzen 50, 52, wobei jeweils drei Schlitze 50 in Richtung der Innenseite 50 und drei Schlitze 52 in Richtung der Außenseite 54 offen sind.

Figur 3 zeigt eine bevorzugte Ausführungsform der Hülse 19. Diese kann insbesondere zur Vereinfachung der Montage und Demontage in Längsrichtung verlaufende Schlitze 58 aufweisen, die sich, wie dargestellt, ausgehend von einander gegenüberliegenden Seite nach innen erstrecken.

## Patentansprüche

1. Steckachsensystem mit
zwei Fahrradelementen (20), insbesondere zwei Kettenstreben (20), Rockerstreben oder dgl.,
eine die beiden Fahrradelemente (20) miteinander verbindenden Steckachse (12) und
zwei jeweils zwischen einem der Fahrradelemente (20) und der Steckachse (12) angeordneten Klemmelement (28) zum kraftschlüssigen Verbinden der Fahrradelemente (20) mit der Steckachse (12).

2. Steckachsensystem nach Anspruch 1, **dadurch gekennzeichnet, dass** mit der Steckachse (12) ein in axialer Richtung der Steckachse (12) verschiebbares Justageelement (38) verbunden ist.

3. Steckachsensystem nach Anspruch 2, **dadurch gekennzeichnet, dass** das Justageelement (38) als Schraube ausgebildet ist, die insbesondere in einer Öffnung (40) der Steckachse (12) einschraubbar ist.

4. Steckachsensystem nach Anspruch 2 oder 3, **dadurch gekennzeichnet, dass** das Justageelement (38) einen insbesondere kopfförmigen Ansatz (42) aufweist, der mit einem der Fahrradelemente (20) zusammenwirkt, insbesondere an einer Außenseite (36) des Fahrradelements (20) anliegt.

5. Steckachsensystem nach Anspruch 2 bis 4, **dadurch gekennzeichnet, dass** die Steckachse (12) einen insbesondere kopfförmigen Ansatz (34) aufweist, der dem Justageelement (38) gegenüberliegt und mit einem der Fahrradelemente (20) zusammenwirkt, insbesondere an einer Außenseite (36) des Fahrradelements (20) anliegt.

6. Steckachsensystem nach Anspruch 1 bis 5, **dadurch gekennzeichnet, dass** die Klemmelemente (28) keil- oder ringförmig ausgebildet sind und die Steckachse (12) insbesondere vollständig umgeben.

7. Steckachsensystem nach Anspruch 1 bis 6, **dadurch gekennzeichnet, dass** eine Außenseite (32) und/oder eine Innenseite (30) mindestens eines der Klemmelemente (28) konisch ausgebildet ist.

8. Steckachsensystem nach Anspruch 7, **dadurch gekennzeichnet, dass** eine Innenseite (24) der Fahrradelemente (20) zu den Außenseiten (32) des Klemmelements (28) komplementär ausgebildet ist.

9. Steckachsensystem nach Anspruch 7 oder 8, **dadurch gekennzeichnet, dass** eine Außenseite (46) der Steckachse zu der Innenseite (30) der Klemmelemente (28) komplementär ausgebildet ist.

10. Steckachsensystem nach Anspruch 1 bis 6, **dadurch gekennzeichnet, dass** die Innenseite (30) mindestens eines der Klemmelemente (28) zylindrisch ausgebildet ist.

11. Steckachsensystem nach Anspruch 1 bis 10, **dadurch gekennzeichnet, dass** zumindest eines der Klemmelemente (28) einen radial verlaufenden Schlitz (44) aufweist.

12. Steckachsensystem nach Anspruch 1 bis 11, **gekennzeichnet durch** ein Fahrradrahmenelement (10) mit einer Durchgangsöffnung (14) zur Aufnahme der Steckachse (12).

13. Steckachsensystem nach Anspruch 12, **dadurch gekennzeichnet, dass** in der Durchgangsöffnung (14) zwischen der Steckachse (12) und dem Fahrradrahmenelement (10) Lagerelemente (16), insbesondere Kugellager (16), angeordnet sind.
